# EUROPEAN PATENT APPLICATION

(11) **EP 4 130 980 A1**
(43) Date of publication of application: **08.02.2023**
(21) Application number: 20926535.4
(22) Date of filing: 27.03.2020
(51) Int. Cl.: G06F 8/60, G06F 9/455, G06F 9/50

(54) **RESOURCE MANAGEMENT DEVICE, RESOURCE MANAGEMENT METHOD, AND RESOURCE MANAGEMENT PROGRAM**

(71) Applicant: Nippon Telegraph And Telephone Corporation, Chiyoda-ku Tokyo 100-8116 (JP)
(72) Inventor: AOKI, Daisuke, Musashino-shi, Tokyo 180-8585 (JP); HASEBE, Katsuyuki, Musashino-shi, Tokyo 180-8585 (JP); KANZAKI, Makoto, Musashino-shi, Tokyo 180-8585 (JP); KUSAKABE, Yusuke, Musashino-shi, Tokyo 180-8585 (JP)
(74) Representative: Dehns
(86) International application number: PCT/JP2020/014210
(87) International publication number: WO 2021/192268

(57) **Abstract**

A resource management device (1) of the present invention includes a determination unit (16) configured to determine whether or not to change design of a system that provides a service based on external information, a selection unit (12, 13) configured to, in a case where it is determined to change the design of the system, select a plurality of resources capable of exchanging data in accordance with a data model which specifies a relation among resources arranged in respective layers of a multi-layer, a design unit (14) configured to generate a blueprint for changing the design of the system using the selected resources, and an orchestrator unit (15) configured to execute orchestration for the system for which the design has been changed in accordance with the generated blueprint.

## Description

### Technical Field

The present invention relates to a resource management device, a resource management method, and a resource management program.

### Background Art

In recent years, techniques for allowing a service provider, such as that of a cloud service, to provide a service to an end user has been actively developed. For example, Patent Literature 1 discloses "an inter-business operator package service construction device that provides a package of one or a plurality of communication services which are released on communication service APIs for each wholesale service provider and which are different from each other, in response to an order request for utilizing a communication service from a terminal which provides communication to a user, the inter-business operator package service construction device including a package construction function unit that retains a catalog describing specifications of communication wholesale services and a coordination rule defining coordination of various kinds of communication services and, in a case where an order request for utilizing a plurality of communication services is made from the terminal, constructs a coordination service by collectively coordinating the communication service APIs corresponding to the plurality of communication services requested by the order request based on the retained catalog and coordination rule and provides the constructed coordination service to the terminal".

### Citation List

### Patent Literature

Patent Literature 1: Japanese Patent Laid-Open No. 2018-32897 (Claim 1)

### Summary of the Invention

### Technical Problem

Further, in recent years, there are a number of services such as a platform as a service (PaaS) and an infrastructure as a service (IaaS) which can be utilized or provided via the Internet, and a technique for a system that provides such a plurality of types of services has been actively developed. A vendor which handles a plurality of types of services has unique domains (multi-domain). In other words, a plurality of types of domains exist, and a system is designed so as to achieve coordination among the domains. Further, a virtualization technology is used to provide a plurality of types of services. Thus, resources within each domain are multi-layered and belong to a physical layer, a virtual layer, an application layer, or the like (multi-layer). The resources are also referred to as information and communication technology (ICT) resources. Further, a system is designed so as to achieve coordination among a plurality of types of services, which achieves interaction among users who utilize different services (multi-service). Note that a multi-service, a multi-domain and a multi-layer will be collectively referred to as "triple multi" below.

However, typically, owners of resources are different, and thus, the respective resources are individually managed for each domain and for each layer. It is therefore normally impossible to apply operation know-how of a system constituted with certain resources to other resources. This results in making control of resources in triple multi extremely complicated in related art and making design of a system which can support triple multi difficult.

Further, a request which acts as a trigger of design of a system may sometimes be abstract, and it is not guaranteed that the designed system is actually optimal. Further, due to change of an external environment, it is not guaranteed that a system which is designed to be optimal remains optimal. Still further, various kinds of knowledge can be obtained when the designed system is operated, which may lead to an understanding of the fact that there is room for improvement in optimization. Thus, although it is desired to change design of a system, in related art, design change of a system requires a lot of time and effort and is therefore not easy.

In view of such circumstances, an object of the present invention is to facilitate design change of a system that provides a plurality of types of services. Means for Solving the Problem

To achieve the above-described object, a resource management device of the present invention includes a determination unit configured to determine whether or not to change design of a system that provides a service based on external information, a selection unit configured to, in a case where it is determined to change the design of the system, select a plurality of resources capable of exchanging data in accordance with a data model which clearly specifies relation among resources arranged in respective layers of a multi-layer, a design unit configured to generate a blueprint for changing the design of the system using the selected resources, and an orchestrator unit configured to execute orchestration for the system for which the design has been changed in accordance with the generated blueprint.

### Advantageous Effects of the Invention

In the present invention, it is possible to facilitate design change of a system that provides a plurality of types of services.

### Brief Description of Drawings

Fig. 1 is a functional configuration diagram of a resource management device according to an embodiment of the present invention.
Fig. 2 is an explanatory diagram of an example of a data model.
Fig. 3 is a flowchart of design change processing.
Fig. 4 is a specific example (1/5) of design change of a system.
] Fig. 5 is a specific example (2/5) of design change of the system.
Fig. 6 is a specific example (3/5) of design change of the system.
Fig. 7 is a specific example (4/5) of design change of the system.
Fig. 8 is a specific example (5/5) of design change of the system.
Fig. 9 is a view illustrating a computer which executes a program of processing according to the present embodiment.

### Description of Embodiments

An embodiment for implementing the present invention (hereinafter, referred to as "the present embodiment") will be described below with reference to the drawings. In the present embodiment, design of a system which can support triple multi will be described. It is assumed that the multi-layer is constituted with a physical layer, a virtual layer and an application layer. The virtual layer exists on the physical layer, and the application layer exists on the virtual layer. Resources for providing a plurality of types of services can be arranged in each of the physical layer, the virtual layer and the application layer. The resource to be arranged in the application layer may be referred to as an "application". For explanatory convenience, an application may be abbreviated as an "app". The resource to be arranged in the physical layer may be referred to as a "physical resource". The resource to be arranged in the virtual layer may be referred to as a "virtual resource". The physical resource and the virtual resource may be collectively referred to as an "infrastructure".

### [Configuration]

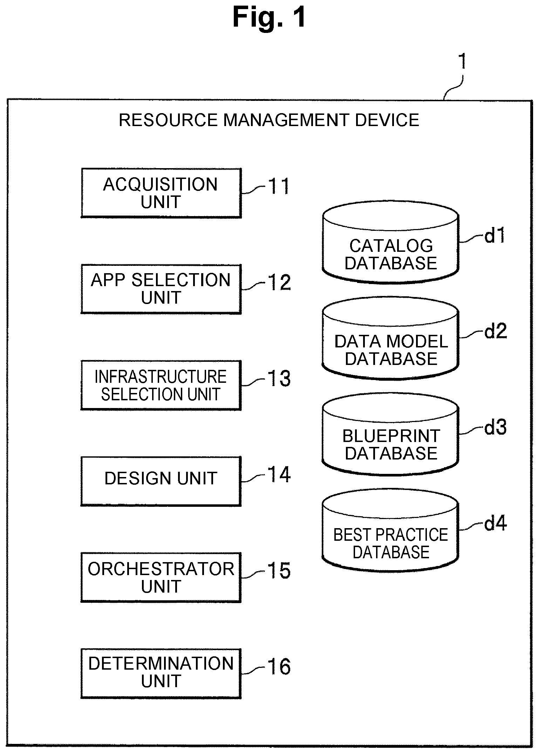

A resource management device of the present embodiment is a device that manages resources for providing a plurality of types of services. As illustrated in Fig. 1, a resource management device 1 according to the present embodiment includes an acquisition unit 11, an app selection unit 12, an infrastructure selection unit 13, a design unit 14, an orchestrator unit 15 and a determination unit 16. Further, the resource management device 1 stores a catalog database d1, a data model database d2, a blueprint database d3 and a best practice database d4. Various kinds of information including the catalog database d1, the data model database d2, the blueprint database d3 and the best practice database d4 are stored in a storage unit (not illustrated) provided at the resource management device 1.

The acquisition unit 11 acquires a request from an external device. The external device includes, but not limited to, for example, a device such as an information terminal to be used by a user who utilizes a service and a console to be used by an operator who manages a network. The request includes, but not limited to, a request which, for example, requires design, construction and change of a system and which, for example, expresses a request on business. A form of the request can include, but not limited to, for example, text, speech and a command. Further, an external information source can be used as the external device, and the acquisition unit 11 can acquire external information from the external information source. The external information includes, but not limited to, for example, an alert occurring on a network by monitoring a system, a log of a system on a network, information posted on a social networking service (SNS) and information regarding weather and traffic. The request may be equated with the external information as a trigger of processing to be performed in the present embodiment, and the request is not distinguished from the external information unless the circumstances are exceptional in the present embodiment.

The app selection unit 12 selects apps for satisfying the request acquired by the acquisition unit 11. The app selection unit 12 can select apps by analyzing the request and extracting a predetermined catalog from the catalog database d1 based on the analysis result. A technique for analyzing a request itself is well known, and thus, detailed description will be omitted. A catalog is a form of process required for providing a service, and one or a plurality of apps required for providing the service are designated. The catalog itself is well known, and thus, detailed description will be omitted.

Further, the app selection unit 12 can set a data pipeline to be utilized by the selected apps. The data pipeline is a path of data from a data transmission source (for example, an infrastructure) to a data transmission destination (for example, an infrastructure). The app selection unit 12 can set the data pipeline through well-known pipeline processing. For example, the data pipeline can include, but not limited to, a pipeline which has predetermined data processing order by a software pipeline which is one of the pipeline processing.

Particularly, the app selection unit 12 can select apps included in a best practice. The app selection unit 12 can select apps by selecting a best practice including apps for satisfying a request from the best practice database d4. The best practice is a group of resources which have been confirmed to be optimized so as to exert performance of a level equal to or greater than a predetermined level in provision of a predetermined service. Details of the best practice will be described later. While the apps selected by the app selection unit 12 may be apps included in the best practice or apps which are not included in the best practice, the app selection unit 12 preferentially selects infrastructures included in the best practice.

The infrastructure selection unit 13 selects infrastructures for the apps selected by the app selection unit 12. The infrastructure selection unit 13 can select infrastructures having relation with the selected apps using a specific data model with reference to the data model database d2. Details of the data model will be described later.

Particularly, the infrastructure selection unit 13 can select infrastructures included in the best practice. The infrastructure selection unit 13 can select infrastructures capable of exchanging data with the apps selected by the app selection unit 12 or infrastructures capable of exchanging data with the infrastructures selected by the infrastructure selection unit 13 with reference to the best practice database d4. While the infrastructures selected by the infrastructure selection unit 13 may be infrastructures included in the best practice or may be infrastructures which are not included in the best practice, the infrastructure selection unit 13 preferentially selects infrastructures included in the best practice.

The design unit 14 designs a system using the apps selected by the app selection unit 12 and the infrastructures selected by the infrastructure selection unit 13. Specifically, the design unit 14 generates a blueprint. The blueprint is design information of a system including resources which satisfy the request. The blueprint itself is well known, and thus, detailed description will be omitted. Further, the design unit 14 can set parameters for generating the blueprint. The parameters include, but not limited to, for example, the number of users who utilize a service, an IP address of physical machine arranged in the physical layer, an IP address of virtual machine arranged in the virtual layer, or the like. The parameter itself is well known, and thus, detailed description will be omitted.

Further, the design unit 14 can change design of a system which is being operated in accordance with a determination result of the determination unit 16. Specifically, the design unit 14 designs a system using the apps reselected by the app selection unit 12 and the infrastructures reselected by the infrastructure selection unit 13. Further, the design unit 14 generates a blueprint for changing design of the system.

The orchestrator unit 15 executes orchestration for the system designed by the design unit 14 in accordance with the blueprint generated by the design unit 14. The orchestration is automatic control of deployment, setting and management of the service. The service is provided by the orchestration. Further, the orchestrator unit 15 can execute a test of the system.

Further, the orchestrator unit 15 can execute orchestration for the system for which design has been changed by the design unit 14 in accordance with the blueprint generated by the design unit 14. Still further, the orchestrator unit 15 can execute a test of the system for which design has been changed.

The determination unit 16 determines whether or not to change design of the system based on the external information. The system which is a determination target can include, but not limited to, a system for which the orchestration and the test have been completed and for which operation has been started. For example, the system which is a determination target may be a designed system before operation. In the present embodiment, description will be continued assuming that the system which is a determination target is a system for which operation has been started.

The catalog database d1 is an aggregate of catalogs. The data model database d2 is an aggregate of data models. The blueprint database d3 is an aggregate of blueprints. The blueprint generated by the design unit 14 is accumulated in the blueprint database d3. The best practice database d4 is an aggregate of best practices.

### <Details of data model>

The data model in the present embodiment clearly specifies relation among resources which exchange predetermined data. The data model is expressed with a set of relation and two resources having the relation. Note that a data model originally determines a structure of data or structured data in an explicit manner. However, in the present invention, the data model is specifically used. In other words, the data model is defined as indicating individual resources provided in a service, or the like, and relation among the resources and can be utilized as a reference for design of a complex system in which a plurality of services are combined. Thus, a group of resources necessary for providing a plurality of services is specified.

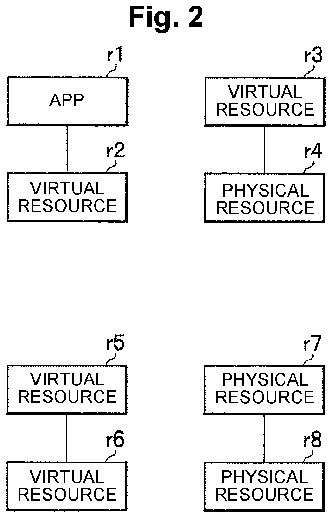

In the present embodiment, the resources are classified into an app arranged in the app layer, a virtual resource arranged in the virtual layer, and a physical resource arranged in the physical layer. Thus, as illustrated in Fig. 2, the data model includes a data model in which relation is formed between an app r1 and a virtual resource r2, and a data model in which relation is formed between a virtual resource r3 and a physical resource r4. These two data models are examples where relation is formed between resources arranged in adjacent layers. Further, as illustrated in Fig. 2, the data model includes a data model in which relation is formed between virtual resources r5 and r6 and a data model in which relation is formed between physical resources r7 and r8. These two data models are examples where relation is formed between resources arranged in the same layer. Note that the data model may include a data model in which relation is formed between two apps.

The data model enables exchange of predetermined data between specified two resources, that is, defines formation of data flow. Thus, in a case where the app selection unit 12 selects apps, the infrastructure selection unit 13 can select virtual resources having relation with the selected apps in accordance with the data model, so that data is exchanged. Further, the infrastructure selection unit 13 can select physical resources or other virtual resources having relation with the selected virtual resources in accordance with the data model, so that data is exchanged. Still further, the infrastructure selection unit 13 can select other physical resources or virtual resources having relation with the selected physical resources in accordance with the data model, so that data is exchanged.

The apps and the virtual resources are updated or upgraded as appropriate in accordance with, for example, change of types of resources to be utilized for providing a predetermined service, change of a way to use the resources (a usage mode of the user), or the like. Further, the physical resources are provided as, for example, equipment which follows new standards as appropriate. Specifically, reduction in granularity of a management unit such as switch of management from management by a server to management by a processing device or a memory which constitutes the server, replacement of worn out equipment with new equipment having reinforced performance, replacement of equipment with equipment having a changed data structure, or the like, is performed. In this manner, the resources dynamically change. Thus, the data model also dynamically changes (is updated). The data model database d2 is updated as appropriate in accordance with such change.

Note that as illustrated in Fig. 2, while the data model is prepared as a data model having relation between two resources, there may be a plurality of data models which have common one resource out of the two resources having relation and have different resources as the other of the two resources. In this case, there may be a plurality of infrastructures having relation with the apps selected by the app selection unit 12 depending on the data model. The infrastructure selection unit 13 can select one infrastructure using predetermined priority order (for example, service level agreement (SLA), link cost and other policies).

Further, owners who own the resources exist for each of the resources. The resource management device 1 can manage the resources in association with the owners of the resources. Further, users having authority of the resources are determined for each of the resources to be managed by the resource management device 1. The resource management device 1 can manage the resources in association with the users having authority of the resources.

Further, regarding a network on which a service is to be provided, tenants are prepared in unit of a virtual network to be provided to specific users (for example, one customer, one company). One tenant can be prepared for one or a plurality of types of services. Thus, one tenant can be allocated to a plurality of resources which comply with a predetermined rule. As a result, the resource management device 1 can manage the resources in association with tenants to which the resources belong.

Use of the data model enables the infrastructure selection unit 13 to select infrastructures capable of exchanging data (data flow) only with reference to relation between the resources (apps, infrastructures). In other words, infrastructures can be selected for the selected apps regardless of which layers of a multi-layer, resources which handle a data flow belong to. Further, infrastructures can be selected for the selected apps regardless of which services of a multi-service, are to be provided by resources which handle a data flow.

Further, a domain in design of a system which can support triple multi relates to the owner of the resource and the tenant described above. In other words, the owner of the resource within the domain can be specified in accordance with the domain, or a tenant which can be equated with the domain can be prepared. However, as described above, the infrastructures for the specific apps are selected by using the data model, so that the infrastructures can be selected for the selected apps regardless of which domains of a multi-domain the resources which handle the data flow belong to.

In this manner, the data model, which can take a versatile data structure by abstracting a difference between respective domains, a difference between respective layers and a difference between respective services, is useful means for optimizing the resources selected for the request.

### <Details of best practice>

As described above, the best practice is a group of resources which have been confirmed to be optimized so as to exert performance of a level equal to or greater than a predetermined level in provision of a predetermined service. The performance of the level equal to or greater than the predetermined level can include, but not limited to, for example, a level in which throughput of exchange of data between resources which constitute the best practice is equal to or greater than a predetermined value.

A group of resources which constitute the best practice includes a group of resources including resources arranged in different layers. In other words, a group of resources which constitute the best practice includes a group of resources including an app and a virtual resource, a group of resources including a virtual resource and a physical resource, and a group of resources including an app, a virtual resource and a physical resource. Further, a group of resources which constitute the best practice includes a group of resources including resources arranged in the same layer. In other words, a group of resources which constitute the best practices includes a group of resources including two or more apps, a group of resources including two or more virtual resources, and a group of resources including two or more physical resources.

A group of resources which constitute the best practices may be a group of resources having relation in accordance with the data model, a group of resources which do not have relation in accordance with the data model, and a group of resources which is a combination of a partial group of resources having relation in accordance with the data model and a partial group of resources which do not have relation in accordance with the data model. It has been confirmed from knowledge (results) in the past that performance of a level equal to or greater than a predetermined level is exerted in exchange of data between resources which constitute the best practice regardless of whether or not there is relation between the resources which constitute the best practice.

The best practice can be a subset of resources which constitute the entire system for providing a predetermined service. In other words, the best practice can provide a partial (local) optimum solution for the entire system. Thus, by collecting a plurality of best practices so that a data flow becomes continuous, the entire system can be designed so as to be optimized. In other words, the best practice is a set of a plurality of partial best practices which provide a partial optimum solution for the entire system, and the selection unit (12, 13) selects resources of the plurality of partial best practices for the entire system, and the design unit 14 generates a blueprint for designing the entire system using the selected resources of the plurality of partial best practices.

The resources which constitute the best practice have already been operated for providing a service, and thus, there is a case where the parameters to be set by the design unit 14 have been set for the resources. In this case, in a case where the app selection unit 12 or the infrastructure selection unit 13 selects the resources, setting of parameters by the design unit 14 may be omitted. In the present embodiment, description will be continued assuming that the setting of parameters by the design unit 14 is omitted. However, the design unit 14 may reset different parameters. Further, in a case where parameters are not set for the resources which constitute the best practice, the design unit 14 can set parameters for the resources.

### <Details of design change of system>

For example, the determination unit 16 can derive one or a plurality of proposed design changes by analyzing the external information acquired by the acquisition unit 11. For example, in a case where an abnormal value exceeding a stipulated range is detected through monitoring of the system, the determination unit 16 can derive proposed design changes, but a case where the proposed design changes can be derived is not limited to this case. The determination unit 16 can derive proposed design changes, for example, with reference to the best practice accumulated in the best practice database d4. In other words, the proposed design changes can be derived by being compared with past results, so that it is possible to improve reliability of the proposed design changes.

Further, the determination unit 16 can evaluate the derived proposed design changes, for example, by well-known scoring which uses a system performance value as an index. As a result, the determination unit 16 can determine a proposed design change with a maximum score. The determination unit 16 can use the determined proposed design change as a request for changing design of the system.

### [Processing]

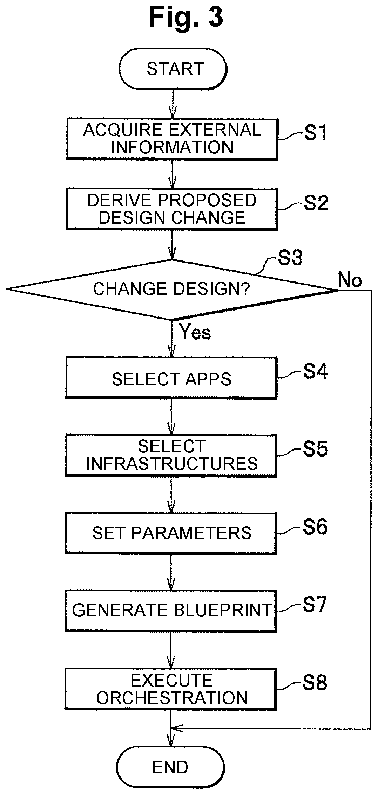

Design change processing to be performed by the resource management device 1 to change design of a system that provides a plurality of types of services will be described with reference to Fig. 3.

### <Design processing>

As a preliminary stage, the resource management device 1 has executed design processing for the system before design change. The design processing is executed through the following procedure. In other words, first, the acquisition unit 11 acquires a request from the external device. Then, the app selection unit 12 analyzes the acquired request and selects apps for satisfying the request. Then, the infrastructure selection unit 13 selects infrastructures having relation with the selected apps or infrastructures having relation with the selected infrastructures in accordance with the data model. Then, the design unit 14 sets parameters for the apps selected by the app selection unit 12 and the infrastructures selected by the infrastructure selection unit 13. Then, the design unit 14 generates a blueprint for designing a system using the apps selected by the app selection unit 12, the infrastructures selected by the infrastructure selection unit 13 and the set parameters. Finally, the orchestrator unit 15 executes orchestration for the system in accordance with the generated blueprint.

According to the design processing described above, it is possible to implement provision of service by the designed system. Note that the orchestrator unit 15 may execute a test of the designed system.

Note that there is a case where a blueprint can be generated without parameters being set depending on the selected apps or infrastructures, which means that parameters are not essential. Thus, setting of parameters is arbitrary. Further, in the design processing, apps and infrastructures may be selected with reference to the best practice database d4.

Further, the design unit 14 can accumulate the generated blueprint in the blueprint database d3. Still further, the design unit 14 can form new relation with the apps and the infrastructures used in the designed system and can generate a new data model. The design unit 14 can accumulate the newly generated data model in the data model database d2. Further, the design unit 14 can determine a new best practice using the apps and the infrastructures used in the designed system. The design unit 14 can accumulate the newly determined best practice in the best practice database d4.

### <Design change processing>

The resource management device 1 executes design change processing in Fig. 3 for the system for which the orchestration and the test have been completed through the above-described design processing and for which operation has been started. First, the acquisition unit 11 acquires external information from an external device (step S1). Then, the determination unit 16 analyzes the external information to derive one or a plurality of proposed design changes (step S2). Then, the determination unit 16 determines whether or not to change design of the system based on the external information (step S3). Specifically, the determination unit 16 determines whether or not to employ a proposed design change with a maximum score among the derived proposed design changes. While, for example, a proposed design change may be employed if a maximum score is equal to or higher than a predetermined value, a criterion for employment is not limited to this.

In a case where it is determined not to change the design (step S3: No), the design change processing is finished. Meanwhile, in a case where it is determined to change the design (step S3: Yes), the app selection unit 12 analyzes a request indicated in the employed proposed design change and selects apps for satisfying the request (step S4). Then, the infrastructure selection unit 13 selects infrastructures having relation with the selected apps or infrastructures having relation with the selected infrastructures in accordance with the data model (step S5). Then, the design unit 14 sets parameters for the apps selected by the app selection unit 12 and the infrastructures selected by the infrastructure selection unit 13 (step S6). Then, the design unit 14 generates a blueprint for changing design of the system using the apps selected by the app selection unit 12, the infrastructures selected by the infrastructure selection unit 13, and the set parameters (step S7). Finally, the orchestrator unit 15 executes orchestration for the system for which design has been changed in accordance with the generated blueprint (step S8). Then, the design change processing is finished.

According to the design change processing in Fig. 3, it is possible to implement provision of a service by the system for which design has been changed. Note that the orchestrator unit 15 may execute a test of the system for which design has been changed.

Note that there is a case where a blueprint can be generated without parameters being set depending on the selected apps or infrastructures, which means that parameters are not essential. Thus, setting of parameters is arbitrary. Further, in design processing, apps and infrastructures may be selected with reference to the best practice database d4.

Further, order of selection of apps by the app selection unit 12 (step S4) and selection of infrastructures by the infrastructure selection unit 13 (step S5) may be changed as appropriate in accordance with the determined proposed design change. In other words, specific infrastructures may be selected before apps are selected.

Further, the design unit 14 can accumulate the blueprint generated in step S7 in the blueprint database d3. Further, the design unit 14 can form new relation with the apps and the infrastructures used in the system for which design has been changed and can generate a new data model. The design unit 14 can accumulate the newly generated data model in the data model database d2. Further, the design unit 14 can determine a new best practice using the apps and the infrastructures used in the system for which design has been changed. The design unit 14 can accumulate the newly determined best practice in the best practice database d4.

The design change processing in Fig. 3 can be repeatedly executed. In other words, design change of the system can be automatically performed without manual intervention by collection of external information being continued. This results in enabling a system to self-evolve so as to converge to be an optimal system.

### [Specific example]

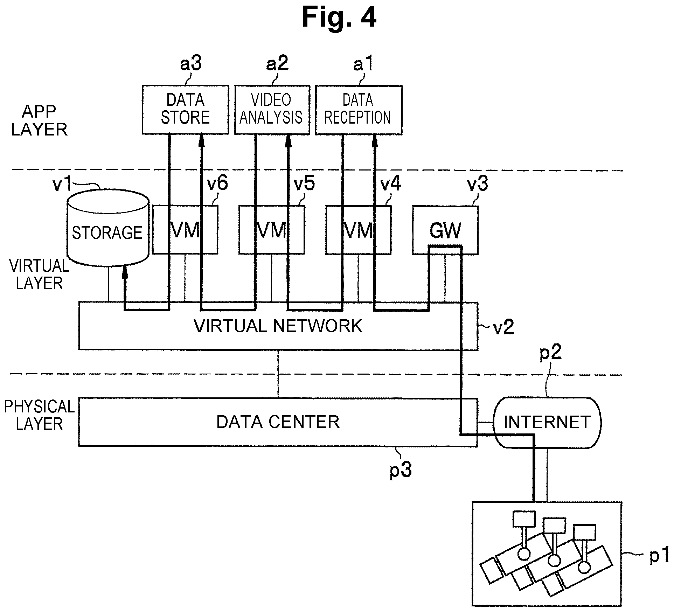

As a specific example, design change of a system designed in response to a request for "detecting a suspicious person from a video input via the Internet" will be described. It is assumed that a group of resources which constitute a system for which operation has been started is as illustrated in Fig. 4. As illustrated in Fig. 4, data reception a1, video analysis a2 and data store a3 are arranged in the app layer. Further, a storage v1, a virtual network v2, a gateway (GW) v3 and virtual machine (VM) v4 to v6 are arranged in the virtual layer. Still further, a security camera p1, the Internet p2 and a data center (DC) p3 are arranged in the physical layer.

Further, as illustrated in Fig. 4, a data pipeline in which the security camera p1 is set as a data transmission source and the storage v1 is set as a data transmission destination is set (solid line with an arrow). The data pipeline depends on the apps selected by the app selection unit 12, and thus, for example, the app selection unit 12 may set the data pipeline, but a component which sets the data pipeline is not limited to this. For example, the design unit 14 may set the data pipeline. Note that in a case where a plurality of types of data pipelines can be set for the selected apps, one data pipeline can be set in accordance with selection of the infrastructures by the infrastructure selection unit 13. In a case where the data pipeline is set, a best practice among the apps is preferably kept. The system in Fig. 4 which is designed so that the security camera p1 can capture an image of a suspicious person, can implement a service which satisfies the request.

The system for which operation has been started can confirm various circumstances through monitoring. For example, circumstances in terms of performance can include slow processing speed, unfulfillment of app operating conditions, over-engineering, or the like. Further, for example, circumstances in terms of cost can include high unexpected cost, or the like. Further, for example, circumstances in terms of usage tendency can include a low utilization rate of a service, biased data sources, biased service utilization time, or the like. Still further, for example, circumstances determined as a defect can include trouble in accessing the system, system down, or the like.

Note that the system can be monitored by the resource management device 1. However, the system is preferably monitored by a plurality of monitoring devices (calculators) different from the resource management device 1 in view of a scale of the system which provides a plurality of types of services being large. In this case, results of monitoring by the plurality of monitoring devices can be made to aggregate at the resource management device 1. While the plurality of monitoring devices can be provided, for example, for each service, for each area or for each tenant, the unit in which the plurality of monitoring devices are provided is not limited to these.

It is assumed, for example, that the following circumstances A to D are confirmed through monitoring of the system for which operation has been started.
Circumstance A (performance): operating requirements of a video analysis app are not satisfied (high latency)
Circumstance B (performance): a traffic amount of the GW is large (large resource usage amount)
Circumstance C (cost): cost for a GW of a DC for cloud service is enormous
Circumstance D (usage tendency): data sources are biased to a specific area

The acquisition unit 11 can acquire the above-described circumstances A to D as the external information. It is assumed that the determination unit 16 analyzes the circumstances A to D to derive the following proposed design changes: options (1) to (3).
Option (1): resources of the GW are extended Option (2): a bit rate of the video is lowered
Option (3): the video analysis app is moved closer to the data source

Note that a method for deriving an option from the circumstance is as follows. In other words, the resource management device 1 holds responses (options) to the circumstances in advance as rules. Further, the resource management device 1 provides scores to the held rules. In a case where the circumstance is confirmed, the resource management device 1 extracts a rule corresponding to the confirmed circumstance. Further, the resource management device 1 determines a rule to be finally selected based on the score provided to the extracted rule. However, the above-described method is an example, and the method for deriving an option from the circumstance is not limited to this. For example, a dedicated AI model may be introduced.

The determination unit 16 evaluates options (1) to (3). As a result, option (1) has a low score because cost of the GW increases, and thus, is negatively evaluated for the circumstance C. Further, option (2) has an extremely low score because operating requirements of the video analysis app cannot be satisfied, and thus, is extremely negatively evaluated for the circumstance A. Meanwhile, option (3) has a high score because all the circumstances A to D can be improved, and thus, is positively evaluated. From the above, the determination unit 16 employs option (3) and changes design of the system while requesting option (3). Note that a method for evaluating a plurality of options and employing one option is not limited to the above, and, for example, can be implemented using predetermined algorithm.

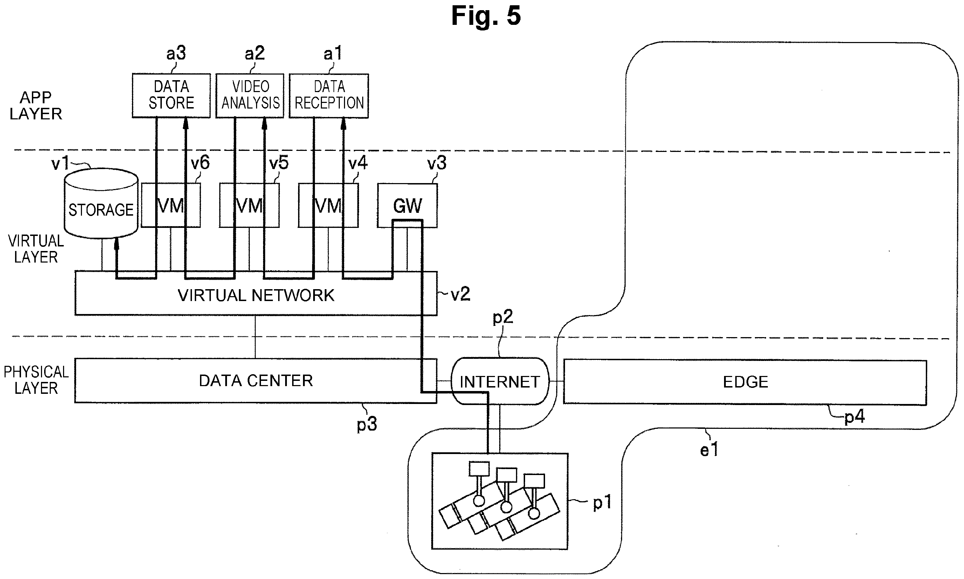

First, as illustrated in Fig. 5, the infrastructure selection unit 13 selects an edge p4 as a physical resource arranged in the physical layer of the data source: area e1. The infrastructure selection unit 13 takes into account usage circumstances, a usage range, application, authority, or the like, of the physical resource upon selection of the physical resources. The edge p4, which is, for example, a multi-purpose common edge, is provisioned when used and released after use.

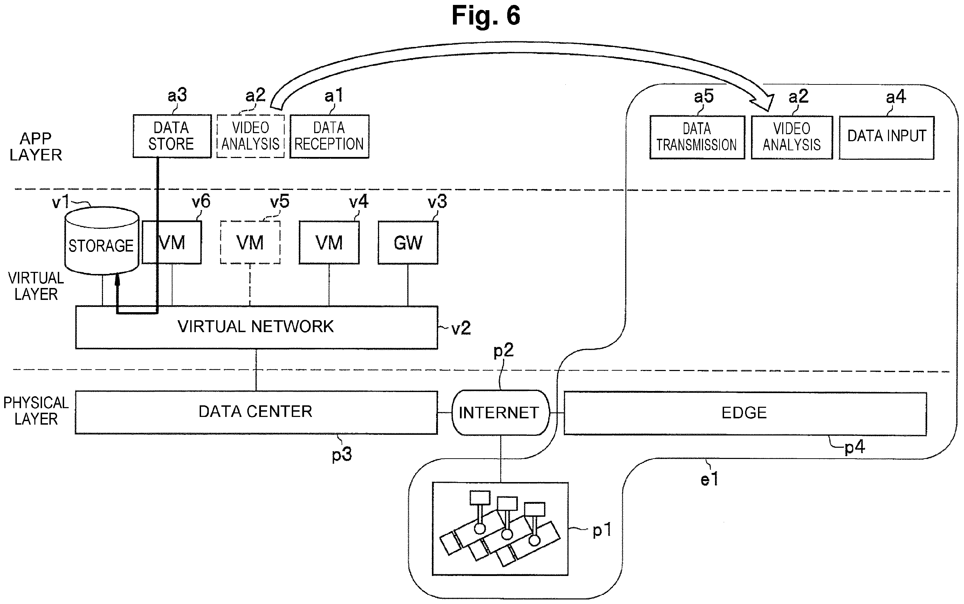

Then, as illustrated in Fig. 6, the app selection unit 12 selects apps to be used in the area e1 (see step S4 in Fig. 3). Specifically, the app selection unit 12 moves video analysis a2 which has been arranged in the domain of the data center p3 to the app layer in the domain of the edge p4 in the area e1. Further, the app selection unit 12 newly arranges data input a4 and data transmission a5 in the app layer of the domain of the edge p4. In the present specific example, an environment where a service using the security camera p1 is provided is switched from a single domain to a distributed environment, and thus, apps are preferably selected so that an app configuration pattern is retained before and after switch. Data input a4 and data transmission a5 have substantially the same specifications as specifications of data reception a1 and data store a3 in terms of data transmission and reception.

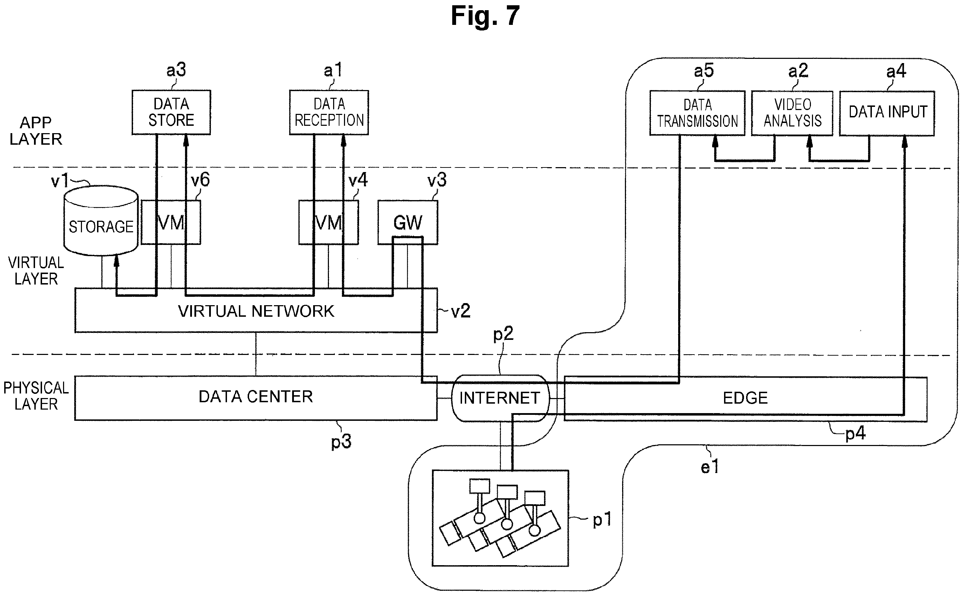

Then, as illustrated in Fig. 7, the app selection unit 12 sets a data pipeline (solid line with an arrow) to be utilized by the selected apps (data input a4, video analysis a2, data transmission a5, data reception a1 and data store a3). The app selection unit 12 can set a data pipeline from the security camera p1 to the storage v1 by way of the selected apps (data input a4, video analysis a2, data transmission a5, data reception a1 and data store a3). Note that in a case where a data pipeline is set, a best practice among the apps is preferably retained.

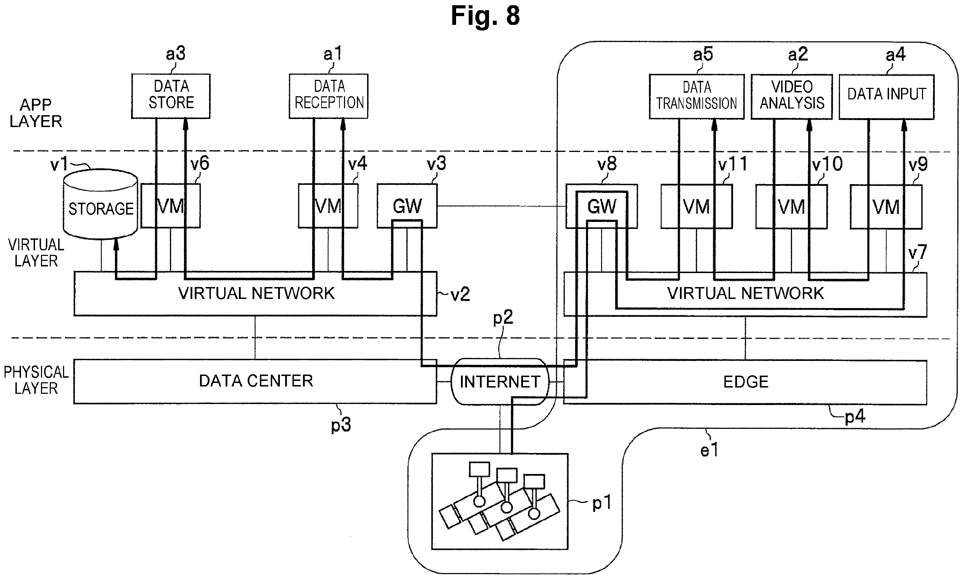

Then, as illustrated in Fig. 8, the infrastructure selection unit 13 selects infrastructures to be used in the area e1 (see step S5 in Fig. 3). The infrastructure selection unit 13 can select the already selected edge p4, the virtual network v7, the GW v8, the VM v9 to v11 in accordance with the data pipeline and the data model. The virtual network v7, the GW v8 and the VM v9 to v11 are resources arranged in the virtual layer. As a result, as illustrated in Fig. 8, a data pipeline which passes through the selected infrastructures is set (solid line with an arrow).

In a case where the selected apps (data input a4, video analysis a2, data transmission a5, data reception a1 and data store a3) have predetermined operating conditions, the infrastructure selection unit 13 preferably selects infrastructures which can fulfill the operating conditions. The "predetermined operating conditions" can be, for example, a condition that the infrastructure has a sufficient resource amount (resource check), but the predetermined operating conditions are not limited to this. In a case where there is an infrastructure whose resource amount is insufficient, the resource management device 1 can notify an owner of the infrastructure that the resource amount is insufficient. A resource having relation with the app by option (3) and the data model can be regarded as a resource which can fulfill the operating conditions of the app. In a case where the infrastructures are selected, the design unit 14 preferably accumulates a best practice of the resources including the infrastructures and the apps in the best practice database d4.

Thereafter, the design unit 14 sets parameters and generates a blueprint (see step S6 to step S7 in Fig. 3), and the orchestrator unit 15 executes orchestration (see step S8 in Fig. 3). It is therefore possible to change design of the system in which the security camera p1 can capture an image of a suspicious person and resolve all the circumstances A to D confirmed through monitoring.

### (Program)

Further, it is possible to cause a computer to execute functions of the resource management device 1 according to the above-described embodiment by a program. In this case, effects similar to the effects of the above-described embodiment can be obtained by the computer executing the program. Further, it is also possible to implement processing similar to the processing in the above-described embodiment by recording the program in a computer readable recording medium and causing the computer to read and execute the program recorded in this recording medium. An example of the computer which executes a resource management program which implements functions similar to the functions of the resource management device 1 will be described below.

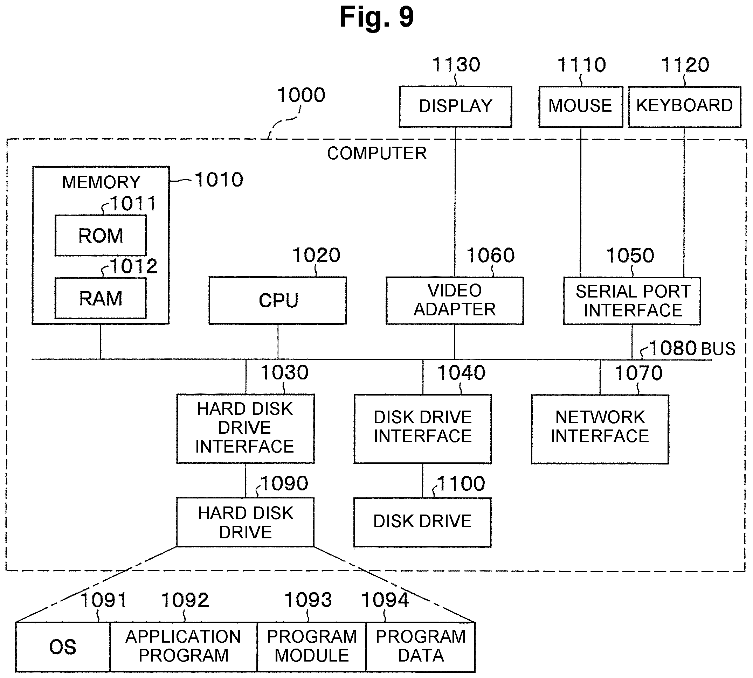

Fig. 9 is a view illustrating a computer which executes the resource management program. As illustrated in Fig. 9, a computer 1000 includes, for example, a memory 1010, a CPU 1020, a hard disk drive interface 1030, a disk drive interface 1040, a serial port interface 1050, a video adapter 1060 and a network interface 1070. These components are connected with a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a detachable storage medium such as a magnetic disk and an optical disk is inserted into the disk drive 1100. For example, a mouse 1110 and a keyboard 1120 are connected to the serial port interface 1050. For example, a display 1130 is connected to the video adapter 1060. The memory 1010, the hard disk drive 1090, the disk drive 1100, and the storage medium to be inserted into the disk drive 1100 become specific hardware resources of the storage unit provided at the resource management device 1.

Here, as illustrated in Fig. 9, the hard disk drive 1090, for example, stores an OS 1091, an application program 1092, a program module 1093 and program data 1094. The respective tables described in the above-described embodiment are stored in, for example, the hard disk drive 1090 and the memory 1010.

Further, the resource management program is stored in the hard disk drive 1090 as, for example, a program module which describes a command to be executed by the computer 1000. Specifically, a program module which describes respective kinds of processing to be executed by the resource management device 1 described in the above-described embodiment is stored in the hard disk drive 1090.

Further, data to be used in information processing by the resource management program is stored in, for example, the hard disk drive 1090 as the program data. Then, the CPU 1020 reads out the program module 1093 and the program data 1094 stored in the hard disk drive 1090 to the RAM 1012 as necessary and executes the above-described procedure.

Note that the program module 1093 and the program data 1094 relating to the resource management program may be stored in, for example, a detachable storage medium and may be read out by the CPU 1020 via the disk drive 1100, or the like, as well as being stored in the hard disk drive 1090. Alternatively, the program module 1093 and the program data 1094 according to the resource management program may be stored in other computers connected via a network such as a local area network (LAN) and a wide area network (WAN) and may be read out by the CPU 1020 via the network interface 1070.

### [Effects]

As described above, the present embodiment is the resource management device 1 including the determination unit 16 configured to determine whether or not to change design of a system that provides a service based on external information, the selection unit (the app selection unit 12, the infrastructure selection unit 13) configured to, in a case where it is determined to change the design of the system, select a plurality of resources capable of exchanging data in accordance with a data model, the design unit 14 configured to generate a blueprint for changing design of the system using the selected resources, and the orchestrator unit 15 configured to execute orchestration for the system for which the design has been changed in accordance with the generated blueprint.

Further, the present embodiment is a resource management method to be executed by the resource management device 1, the resource management method including a step of determining whether or not to change design of a system that provides a service based on external information, a step of, in a case where it is determined to change the design of the system, selecting a plurality of resources capable of exchanging data in accordance with a data model, a step of generating a blueprint for changing the design of the system using the selected resources, and a step of executing orchestration for the system for which the design has been changed in accordance with the generated blueprint.

According to these, the present embodiment can re-set a data pipeline for providing a plurality of types of services. Thus, the present embodiment can facilitate design change of a system that provides a plurality of types of services. Further, the present embodiment can automatically change design of the system without manual intervention by continuing collection of the external information. This results in enabling the present embodiment to self-evolve so as to converge to be an optimal system.

Further, the plurality of resources include an app for satisfying a request derived from the external information and an infrastructure having relation with the app.

This enables the present embodiment to re-set a data pipeline in accordance with the apps selected in accordance with the request.

Further, the resources include resources included in a best practice.

This enables the present embodiment to further facilitate design change of a system that provides a plurality of types of services.

Further, the determination unit 16 analyzes the external information acquired through monitoring of the system to derive one or a plurality of proposed design changes and employs one of the derived proposed design changes using predetermined algorithm.

This enables the present embodiment to automatically change design of a system without manual intervention by continuing monitoring of the system. This results in enabling a system to self-evolve so as to converge to be an optimal system.

### [Modified examples]

(a): It is possible to construct an AI model which has learned a combination of a request, a best practice selected for satisfying the request, and a performance value (for example, throughput) of a system including the best practice through machine learning. It is possible to obtain as output, a best practice which achieves a desired performance value of the system by inputting an unknown request to the AI model. Further, it is possible to cause the AI model to learn a combination of a request, a best practice and a performance value of a system including the best practice through machine learning for the output best practice and apply the AI model to design change processing in the present embodiment.
(b): In a case where a plurality of proposed design changes (options) are derived, the determination unit 16 can set a combination of two or more derived proposed design changes as one new proposed design change. In a case where a score of the new proposed design change is a maximum, the determination unit 16 employs the new proposed design change, so that the resource management device 1 can implement design change processing.
(c) : Design change of a system in the present invention includes design change which is not accompanied by addition and deletion of resources, that is, design change in which resources which constitute the system are not changed. Such design change can be executed based on internal information of the system instead of the external information described above, but the information is not limited to this. For example, in a case where a suspicious person is detected in smart city which monitors a suspicious person with a security camera, resolution of a video of the security camera can be autonomously made higher by autonomously increasing a coding rate of the video of the security camera (infrastructure) or by autonomously increasing a bandwidth of a network.
(d): Various kinds of techniques described in the present embodiment can be combined as appropriate.

### Reference Signs List

- 1: Resource management device

- 11: Acquisition unit
- 12: App selection unit (selection unit)
- 13: Infrastructure selection unit (selection unit)
- 14: Design unit
- 15: Orchestrator unit
- 16: Determination unit
- d1: Catalog database
- d2: Data model database
- d3: Blueprint database
- d4: Best practice database

## Claims

1. A resource management device comprising:
a determination unit configured to determine whether or not to change design of a system that provides a service based on external information;
a selection unit configured to, in a case where it is determined to change the design of the system, select a plurality of resources capable of exchanging data in accordance with a data model which specifies a relation among resources arranged in respective layers of a multi-layer;
a design unit configured to generate a blueprint for changing the design of the system using the selected resources; and
an orchestrator unit configured to execute orchestration for the system for which the design has been changed in accordance with the generated blueprint.

2. The resource management device according to claim 1,
wherein the plurality of resources include an application for satisfying a request derived from the external information and an infrastructure having relation with the app.

3. The resource management device according to claim 1 or 2,
wherein the resources include resources included in a best practice.

4. The resource management device according to any one of claims 1 to 3,
wherein the determination unit analyzes the external information acquired through monitoring of the system to derive one or a plurality of proposed design changes and employs one of the derived proposed design changes using predetermined algorithm.

5. A resource management method of a resource management device, comprising:
a step of determining whether or not to change design of a system that provides a service based on external information;
a step of, in a case where it is determined to change the design of the system, selecting a plurality of resources capable of exchanging data in accordance with a data model which specifies a relation among resources arranged in respective layers of a multi-layer;
a step of generating a blueprint for changing the design of the system using the selected resources; and
a step of executing orchestration for the system for which the design has been changed in accordance with the generated blueprint.

6. The resource management method according to claim 5,
wherein the plurality of resources include an application for satisfying a request derived from the external information and an infrastructure having a relation with the app.

7. The resource management method according to claim 5 or 6,
wherein the resources include resources included in a best practice.

8. The resource management method according to any one of claims 5 to 7,
wherein the resource management device analyzes the external information acquired through monitoring of the system to derive one or a plurality of proposed design changes, and employs one of the derived proposed design changes using predetermined algorithm in the step of determining.

9. A resource management program for causing a
computer to execute the resource management method according to any one of claims 5 to 8.
